# EUROPÄISCHE PATENTSCHRIFT

(11) **EP 3 482 905 B1**
(45) Veröffentlichungstag und Bekanntmachung des Hinweises auf die Patenterteilung: **04.03.2020**
(21) Anmeldenummer: 17201525.7
(22) Anmeldetag: 14.11.2017
(51) Int. Cl.: B29C 45/26, B33Y 80/00, B29C 33/38, B29C 33/44, B29C 45/40

(54) **FORMWERKZEUG SOWIE VERFAHREN ZUM FORMEN EINES BAUTEILS**
MOULD AND METHOD FOR MOULDING A STRUCTURAL MEMBER
MOULE AINSI QUE PROCÉDÉ DE MOULAGE D'UN COMPOSANT

(43) Veröffentlichungstag der Anmeldung: 15.05.2019
(73) Patentinhaber: Wirthwein AG, 97993 Creglingen (DE)
(72) Erfinder: WIRTHWEIN, Marcus, 97993 Creglingen (DE); DÖRFLER, Thomas, 97993 Creglingen (DE); SCHEIDERER, Paul, 97993 Creglingen (DE)
(74) Vertreter: Stippl, Hubert

(56) Entgegenhaltungen:
- WO-A2-2008/094649
- DE-A1- 10 025 804
- DE-A1-102014 104 680
- DE-A1-102016 201 063
- US-A- 5 952 018
- US-A1- 2008 317 899
- US-A1- 2013 149 409
- US-A1- 2015 336 298

## Beschreibung

Die vorliegende Erfindung betrifft ein Formwerkzeug gemäß dem Oberbegriff des Anspruchs 1 sowie ein Verfahren zum Formen eines Bauteils.

### Technologischer Hintergrund

Die vorliegende Idee betrifft den Bereich der Spritzgießtechnik. Hierbei handelt es sich um eine Technik zur Herstellung dreidimensionaler Objekte, bei der geschmolzenes thermoplastisches Material in ein Formwerkzeug gespritzt wird, um das Objekt zu formen. Nach dem Abkühlen wird das Formwerkzeug geöffnet und das geformte Objekt ausgestoßen. Das Formwerkzeug umfasst zu diesem Zweck Formeinsätze, welche eine Kavität aufweisen, wodurch ein Formhohlraum des Formwerkzeugs begrenzt wird. Der Formeinsatz besteht üblicherweise aus Metall. Die gewünschte Kavität muss durch arbeits- und/oder zeitintensive Metallbearbeitung wie z.B. durch Fräsen, Erodieren oder Lasern in den Formeinsatz eingebracht werden. Entsprechende Formeinsätze eignen sich daher gut für die Herstellung einer großen Anzahl von Objekten. Für geringe Serien (z. B. Prototypen oder Musterobjekte) ist das Verfahren allerdings kosten- sowie zeitintensiv.

Neuerdings ist man dazu übergegangen, Prototypen oder Musterobjekte durch alternative Formgebungsverfahren herzustellen. Hierzu zählt insbesondere das so genannte 3D-Druckverfahren. Beim 3D-Druck-Verfahren werden dreidimensionale Werkstücke schichtweise aufgebaut. Der Aufbau erfolgt rechnergesteuert (CAD) aus einem flüssigen oder festen Werkstoff nach vorgegebenen Maßen und Formen. Beim Aufbau finden physikalische und/oder chemische Härtungs- oder Schmelzprozesse statt. Typische Werkstoffe für das 3D-Drucken sind Kunststoffe, Kunstharze, Keramiken aber auch Metalle. Zwar können durch das 3D-Druck-Verfahren Prototypen oder Musterobjekte einfacher hergestellt werden als in dem eingangs beschriebenen herkömmlichen Formenbau für die Spritzgießtechnik, allerdings ist das 3D-Druck-Verfahren nicht für besondere Einsatzbereiche, z. B. Maschinenbau oder Fahrzeugtechnik, möglich, bei denen Prototypen oder Musterobjekte bereits bestimmte physikalische und/oder technische Eigenschaften besitzen müssen, die den in der Realität einzusetzenden Teilen zumindest im Wesentlichen entsprechen.

### Druckschriftlicher Stand der Technik

Ein Verfahren gemäß dem Oberbegriff des Anspruchs 1 ist aus US 5 952 018 bekannt. Ein erster Formeinsatz, zweiter Formeinsatz sowie ein Auswerfer werden in einem additiven Prozess, der Schicht auf Schicht aufträgt, gefertigt. Der Auswerfer ist mittig zu den beiden Formeinsätzen angeordnet, Druckluft angetrieben und greift mittig am Formteils an.

US 2008/0317899 A1 sowie US 2013/0149409 zeigen jeweils eine Spritzgießform mit einem vertikal verfahrbaren Auswerferring, der sich in einer ringförmigen Ausnehmung einer feststehenden Trägerplatte befindet.

Die DE 10 2014 104 680 A1 beschreibt ein Verfahren, die Verwendung eines im 3D-Druck hergestellten Formeinsatzes für einen Spritzgießvorgang beinhaltet und daher eine schnellere Herstellung von realitätsechten Prototypbauteilen ermöglicht, die in nur kleiner Stückzahl hergestellt werden. Da der Formeinsatz relativ schnell mittels eines 3D Druckers erstellt werden kann, können mit gleichen Formhälften und unterschiedlichen Formeinsätzen unterschiedlich geformte Bauteile gespritzt werden.

Aus der DE 198 31 315 A1 ist ein Verfahren zur Herstellung von Prototypwerkzeugen bekannt, bei dem zunächst ein Werkzeugeinsatznegativ mittels einem Rapid Prototyping-Verfahren (z. B. Stereolithographie) hergestellt wird. Das Werkzeugeinsatznegativ wird anschließend in ein Stammwerkzeug eingesetzt und im Metallpulver-Injektionsform-Prozess abgespritzt. Der so erhaltene Grünling wird dann zu einem fertigen Prototypwerkzeugeinsatz gesintert.

In der DE 10 2016 205 384 A1 wird ein Verfahren beschrieben, bei dem mittels eines 3D Druckers ein erster Abschnitt eines dreidimensionalen Objekts gebildet wird, dessen Form in einem zweiten Schritt durch einen Spritzgießvorgang komplettiert wird.

### Aufgabe der vorliegenden Erfindung

Die Aufgabe der vorliegenden Erfindung besteht darin, ein gattungsgemäßes Formwerkzeug sowie ein gattungsgemäßes Verfahren zu Verbessern, so dass es möglich wird, Bauteile mit größeren Dimensionen in einfacher und kostengünstiger Weise herzustellen.

### Lösung der Aufgabe

Die vorstehende Aufgabe wird erfindungsgemäß durch die Merkmale des kennzeichnenden Teils des Anspruchs 1 gelöst. Im Bereich des äußeren Umfangs des auswerferseitigen 3D-gedruckten Formeinsatzes ist eine, vorzugsweise ringförmige, Abstreifeinrichtung vorgesehen. Die Abstreifeinrichtung ist am Formwerkzeug relativ zum Bauteil bewegbar angeordnet. Zudem ist auch die Abstreifeinrichtung durch einen generativen, vorzugsweise schichtförmigen Aufbau aus einem verfestigbaren Material, d.h. ebenfalls im 3D-Druckverfahren, hergestellt. Dementsprechend werden sowohl die Formeinsätze als auch die Abstreifeinrichtung im 3D-Druck erzeugt. Kommt es zu einer Änderung der Bauteilform- und/oder Bauteilgröße, beispielsweise bei einer Reduzierung des Durchmessers des Bauteils, kann die hierdurch notwendige Umrüstung des Formwerkzeugs ohne Umbau des Formwerkzeugs durch einfache Anpassung des Formeinsatzes sowie der Abstreifeinrichtung (beispielsweise durch Verbreiterung der randseitigen Abstreifeinrichtung) durch Änderung der 3D-gedruckten Teile besonders leicht vorgenommen werden. Die Erfindung ermöglicht es daher, vor allem großformatige, vorzugsweise rotationssymmetrische Bauteile in der Prototyp-Qualität besonders variabel und kostengünstig zu fertigen.

Ferner ist ein axial verfahrbarer, vorzugsweise ringförmiger, Träger mit einer Auflagefläche versehen, die unterhalb an der Abstreifeinrichtung anliegt. Der Träger ist in Auswerfrichtung bewegbar und dient dazu, über seine Auflagefläche die Abstreifeinrichtung zu tragen. Der Träger, welcher vorzugsweise aus Metall bestehen kann, trägt somit die 3D-gedruckte Abstreifeinrichtung, wobei letztere dazu dient, das geformte Bauteil nach dessen Abkühlung aus dem auswerferseitigen ebenfalls 3D-gedruckten Formeinsatz heraus zu hebeln.Die Auflagefläche des Trägers ist variabel ausgestaltet, um eine Vergrößerung und/oder Verkleinerung der Auflagefläche für die Abstreifeinrichtung zu ermöglichen. Letzteres bedingt wiederum, dass es möglich ist, mittels des Trägers die Lage der Trennebene zwischen der Abstreifeinrichtung und dem seitlich zur Abstreifeinrichtung befindlichen Formeinsatz zu variieren. Demzufolge müssen für eine Änderung der Dimension des zu formenden Bauteils lediglich die Abstreifeinrichtung sowie der seitlich hierzu benachbarte Formeinsatz geändert werden, was aufgrund des 3D-Drucks der beiden Teile einfach durchzuführen ist. Aufwendige Umbaumaßnahmen an dem Formwerkzeug entfallen. Das Formwerkzeug ist hierdurch besonders einsatzvariabel.

Vorzugsweise kann die Kavität des Formeinsatzes der düsenseitigen Formhälfte die Abstreifeinrichtung geringfügig (z.B. 1.0-3.0 mm) in radialer Richtung überragen. Bei Auswerfbewegung der Abstreifeinrichtung wird hierdurch das Bauteil aus der Kavität des auswerferseitigen Formeinsatzes herausgehebelt werden, ohne dass es zu einer Beschädigung des Bauteils vor allem auch bei größeren Dimensionen desselben kommt.

Zur Veränderung der Auflagefläche kann z.B. mindestens ein mit dem Träger verbindbares Flächenelement vorgesehen sein. Letzteres kann beispielsweise am Träger in einfacher Weise angeschraubt sein.

Es ist vorteilhaft, wenn eine Mehrzahl von Flächenelementen entlang des Umfangs des Trägers bei Bedarf positionierbar sind, wodurch eine entlang des Umfangs herum wirksame Vergrößerung der Auflagefläche der Abstreifeinrichtung gewährleistet ist.

Zweckmäßigerweise kann die Oberfläche des Flächenelements mit der Oberfläche der Auflagefläche am Träger, zumindest im Wesentlichen, bündig verlaufen, sodass das oder die Flächenelement(e) mit der Oberseite der Auflagefläche des Trägers eine einheitlich durchgehende Auflagefläche bilden.

Zweckmäßigerweise können Ausnehmungen am Träger vorgesehen sein, in die die einzelnen Flächenelemente im geschlossenen Zustand des Formwerkzeugs eintauchen.

Gemäß einer zweckmäßigen Ausgestaltung ist das jeweilige Flächenelement als Plättchen ausgebildet. Zur Verbindung des Flächenelements mit dem Träger kann jeweils eine Schraubverbindung vorgesehen sein.

Ferner kann das Werkzeug für jede Formhälfte eine Spanneinrichtung aufweisen, die mit einer Montagefläche versehen ist, an der der Formeinsatz, vorzugsweise über eine Schraubverbindung, befestigt werden kann.

Dadurch, dass in der Montagefläche der Spanneinrichtung Vertiefungen vorgesehen sind, ist es möglich, dass die Flächenelemente der Abstreifeinrichtung an der auswurfseitigen Formhälfte im geschlossenen Zustand des Formwerkzeugs in diese Vertiefungen eintauchen und die Flächenelemente und/oder den Träger aufnehmen.

Zweckmäßigerweise kann ferner ein axial verfahrbarer Mitteleinsatz vorgesehen sein, der außenseitig von dem Formeinsatz der auswerferseitigen Formhälfte umgeben ist. Beim Auswerfen des Bauteils wird der Mitteleinsatz axial in Richtung Öffnungsbewegung der gegenüberliegenden Formhälfte verfahren. Hierdurch kann durch Bewegung des Mitteleinsatzes das Bauteil zentral aus dem Formeinsatz herausgehebelt werden. Auf diese Weise können besonders großflächige Bauteile hergestellt werden.

Dadurch, dass im Mittelbereich des Formeinsatzes Haltemittel zur Positionsfixierung des Formeinsatzes vorgesehen sind, die zur gegenüberliegenden Formhälfte verdeckt angeordnet sind, wird vermieden, dass beim Abziehen des geformten und abgekühlten Bauteils der auswerferseitige Formeinsatz in dessen Mittelbereich mit ungünstigen Scherkräften belastet wird. Eine Fixierung des Mittelbereichs über sichtbare Schraubverbindungen mit der Spanneinrichtung ist nicht möglich, da sich diese auf dem Bauteil abzeichnen würden. Die betreffenden Haltemittel bieten hierzu Abhilfe.

Vorzugsweise können die Haltemittel mindestens einen Vorsprung aufweisen, der in eine Ausnehmung am Formeinsatz oder umgekehrt eingreift. Beispielsweise greift der Vorsprung in eine senkrecht zur Öffnungsbewegung der beiden Formhälften orientierte Ausnehmung am Formeinsatz ein.

Die Haltemittel können hierzu eine Hülse umfassen, die den Mitteleinsatz umgreift, d.h. auf diesen aufgeschoben ist. Hierdurch kann bei lagearretierter Hülse der Mitteleinsatz in der Hülse verfahren werden, wobei die Hülse gleichzeitig den Formeinsatz in seiner Lage fixiert.

Um die Hülse und den Formeinsatz miteinander zu verbinden, kann beispielsweise der Formeinsatz mit der Hülse nach Art eines Bajonettverschlusses verbunden werden.

Zum Lösen der Positionsfixierung des Formeinsatzes kann mindestens ein Befestigungselement vorgesehen sein, welches vorzugsweise seitlich am Formwerkzeug zugänglich ist.

Dementsprechend kann das Befestigungselement mindestens einen positionsveränderbaren Vorsprung aufweisen, der in eine entsprechende Ausnehmung an der Hülse eingreift bzw. aus der zum Lösen der Positionsfixierung des Formwerkzeugs herausgezogen werden kann.

Besonders zweckmäßig ist es, wenn es sich bei dem Bauteil, welches mittels des erfindungsgemäßen Formwerkzeugs produziert werden kann, um eine rotationssymmetrisches Bauteil oder ein Lüfterrad handelt.

Des Weiteren beansprucht die vorliegende Erfindung ein Verfahren zur Herstellung eines Bauteils im Spritzgießverfahren unter Verwendung eines Formwerkzeugs nach einem der Ansprüche 1-18.

### Beschreibung der Erfindung anhand von Ausführungsbeispielen

Zweckmäßige Ausführungsbeispiele der vorliegenden Erfindung werden nachstehend anhand der Zeichnungsfiguren näher erläutert. Wiederkehrende Merkmale sind der Übersichtlichkeit halber jeweils nur einmal mit der betreffenden Bezugsziffer gekennzeichnet. Es zeigen:
- Fig. 1: eine Schnittdarstellung durch ein Formwerkzeug mit einem Formeinsatz gemäß einer ersten Ausgestaltung der vorliegenden Erfindung;
- Fig. 2: eine perspektivische Darstellung einer Spanneinrichtung der ersten Formhälfte des Formwerkzeugs nach Fig. 1;
- Fig. 3: eine perspektivische Darstellung einer Spanneinrichtung der zweiten Formhälfte des Formwerkzeugs nach Fig. 1;
- Fig. 4: eine perspektivische Darstellung des ringförmigen Trägers einer zweiten Formhälfte des Formwerkzeugs nach Fig. 1 ohne Flächenelemente;
- Fig. 5: eine perspektivische Darstellung des Trägers einer zweiten Formhälfte des ringförmigen Formwerkzeugs nach Fig. 1 mit Flächenelemente;
- Fig. 6: eine perspektivische Darstellung eines zweiten Formeinsatzes mit Abstreifeinrichtung für einen großen Bauteildurchmesser;
- Fig. 7: eine Draufsicht auf den zweiten Formeinsatz nach Fig. 6 ohne Abstreifeinrichtung;
- Fig. 8: eine Schnittdarstellung durch eine weitere Ausgestaltung des zweiten Formeinsatzes einschließlich Abstreifeinrichtung sowie Träger für einen kleinen Bauteildurchmesser;
- Fig. 9: eine Draufsicht auf die Abstreifeinrichtung der Anordnung nach Fig. 8;
- Fig. 10: eine perspektivische Darstellung der Abstreifeinrichtung aus Fig. 9 mit darin befindlichem zweiten Formeinsatz (unter zeichnerischer Weglassung des Trägers) sowie
- Fig. 11: eine vergrößerte Teilschnittdarstellung des zweiten Formeinsatzes im Bereich der Hülse gemäß der Ausgestaltung nach Fig. 1.

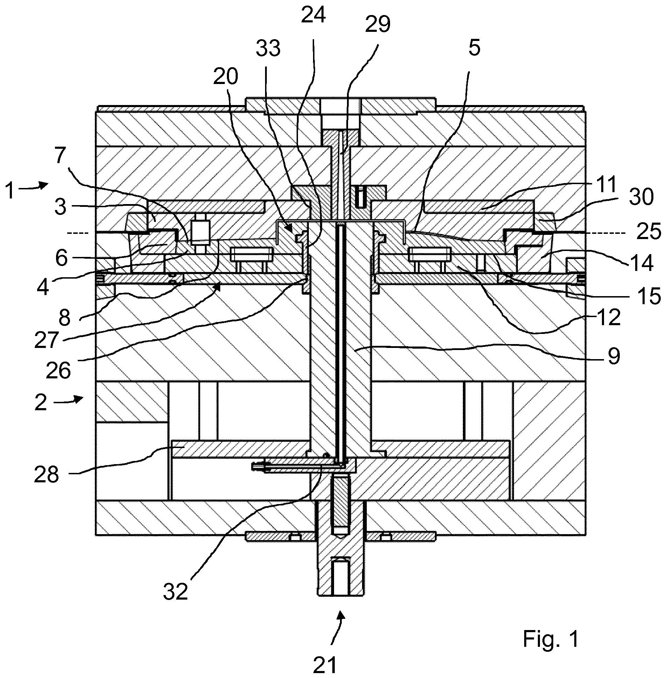

Fig. 1 zeigt eine Schnittdarstellung durch ein Formwerkzeug zur Herstellung eines Spritzlings oder Formkörpers, vorzugsweise eines großflächigen Formteils, wie z.B. eines Lüfterrads oder eines anderen, insbesondere rotationssymmetrischen, Bauteils. Das Formwerkzeug umfasst eine erste Formhälfte 1 der Düsenseite, über die thermoplastisches Spritzgießmaterial von einem (nicht dargestellten) Extruder eingesetzt wird. Die zweite Formhälfte 2 bildet die sogenannte Auswerferseite. Die Trennebene des Formwerkzeugs ist mit der gestrichelten Linie bei der Bezugsziffer 25 gekennzeichnet.

Die erste Formhälfte 1 umfasst eine in eine Ausnehmung untergebrachte, vorzugsweise aus Stahl bestehende Spanneinrichtung 11, die dazu dient, einen ersten Formeinsatz 3 der ersten Formhälfte 1 zu fixieren. Dieser erste Formeinsatz 3 besitzt eine Kavität 7.

Im Mittelbereich der ersten Formhälfte 1 ist ein Zuführkanal 29 für das verflüssigte Spritzgießmaterial vorgesehen. Der erste Formeinsatz 3 ist über (nicht dargestellte) Schraubverbindungen mit der Spanneinrichtung 11 fest verbunden. An der Außenseite des ersten Formeinsatzes 3 befinden sich Druckleisten 30 zur Positionierung des Formeinsatzes 3.

Die zweite Formhälfte 2 weist ebenfalls eine vorzugsweise aus Stahl bestehende Spanneinrichtung 12 zur Befestigung der zweiten Formhälfte 2 auf. Der zweite Formeinsatz 4 ist über Schrauben mit der Spanneinrichtung 12 fest verbunden. An der Außenseite der Spanneinrichtung 12 befindet sich ein umlaufender, vorzugsweise kreisringförmiger Träger 14, der eine Auflagefläche 15 für eine Abstreifeinrichtung 6 bildet, die sich im Außenbereich des zweiten Formeinsatzes 4 befindet und vorzugsweise ebenfalls vollumfänglich umlaufend ausgebildet ist. Der Träger 14 besteht vorzugsweise aus Stahl und kann die aus Fig. 1 ersichtliche L-förmige Gestaltung aufweisen.

Im Mittelbereich 21 der zweiten Formhälfte 2 befindet sich ein Mitteleinsatz 9, welcher mit einer Trägerplatte 28 fest verbunden ist. Der Mitteleinsatz 9 sowie die Trägerplatte 28 sind vertikal verfahrbar.

Der Träger 14 steht, ebenso wie der Mitteleinsatz 9 der zweiten Formhälfte 2, mit der Trägerplatte 28 in Verbindung. Bezugsziffer 32 bezeichnet Kühlungselemente des Mitteleinsatzes 9, der mit der Trägerplatte 28 fest verbunden ist. Die Kühlungselemente 32 sind fest verbaut.

Im Bereich des Formeinsatzes 4 sowie der Spanneinrichtung 12 ist der Mitteleinsatz 9 von einer Hülse 24 außenumfänglich umgeben. Die Hülse 24 bildet eine Halteeinrichtung 20 für den zweiten Formeinsatz 4 beim vertikalen Verfahren des Messeinsatzes 9, d.h. beim Ausstoßen des Formlings. Die Halteeinrichtung 20 ist zur gegenüberliegenden Formhälfte 1 verdeckt angeordnet. Sie dient dazu, Kräfte aufzunehmen, die beim Auswerfen des Formteils im Mittelbereich 21 des zweiten Formeinsatzes 4 entstehen. Zur Verriegelung der Vertikalposition der Hülse 24 ist mindestens ein Betätigungselement 27 vorgesehen, welches beispielsweise einen außenseitigen Einsatz 27a, eine Gewindestange 27b sowie einen Schieber 27c umfassen kann, der in eine an der Hülse 24 vorgesehene, vorzugsweise umlaufende Ausnehmung 26, eingreift.

Die Besonderheit des in Fig. 1 gezeigten Formwerkzeugs besteht darin, dass der erste sowie zweite Formeinsatz 3 bzw. 4 als 3D-Druckformteil ausgebildet sind, d.h. aus einem verfestigbaren Material schichtförmig aufgebaut sind. Dies gilt gleichermaßen auch für die ringförmige Abstreifeinrichtung 6. Der erste sowie zweite Formeinsatz 3, 4 bilden mit ihren betreffenden Kavitäten 7, 8 zusammen mit den jeweiligen Mitteleinsätzen 9 bzw. 33 den Formhohlraum 5. Der Formhohlraum 5 ist somit bis auf den Bereich des jeweiligen Mitteleinsatzes 9 bzw. 33 ausschließlich durch ein Material festgelegt, welches im 3D-Druckverfahren erzeugt worden ist. Daraus resultiert der Vorteil, dass Änderungen des herzustellenden Bauteils lediglich durch einen Austausch der 3D-gedruckten Formeinsätze 3, 4 sowie der Abstreifeinrichtung erfolgen können, ohne dass aufwändige Umbaumaßnahmen an dem aus Stahl bestehenden Teil des Formwerkzeugs notwendig sind. Daraus resultiert der Vorteil, dass vor allem Prototyp-Bauteile mit physikalischen und/oder technischen Eigenschaften, die den in der Realität einzusetzenden Teilen zumindest im Wesentlichen entsprechen, in besonders einfacher und variabler Art und Weise hergestellt bzw. variiert werden können. Die Formeinsätze 3 und/oder 4 einschließlich Abstreifeinrichtung können hierbei aus Kunststoff, Kunstharz oder sogar aus Metall (Aluminium oder eine Aluminiumlegierung) bestehen.

Die Kavität 7 des ersten Formeinsatzes 3 der düsenseitigen Formhälfte 1 überragt in radialer bzw. horizontaler Richtung etwas die Abstreifeinrichtung 6. Daraus folgt, dass das sich in dem Formhohlraum 5 des Formwerkzeugs ausbildende Formteil an der Oberseite der Abstreifeinrichtung 6 anliegt, sodass bei geöffneter Form sowie vertikalem Verfahren der Trägerplatte 8 nach oben die Abstreifeinrichtung 6 das Bauteil aus der Kavität 7 des zweiten Formeinsatzes 4 herauszieht.

Die Halteeinrichtung 20 im Mittelbereich 21 des zweiten Formeinsatzes 4 hält letzteren während der Auswerfbewegung des Mitteleinsatzes 9 in Position und verhindert damit das Auftreten von Scherkräften aufgrund der Abzugshaltekraft des Formteils im Mittelbereich 21 des zweiten Formeinsatzes 4. Durch seitliche Betätigung der jeweiligen Gewindestange 27b des Betätigungselements 27 am Einsatz 27a in Fig. 1 kann die Arretierung der Hülse 24 im Bereich der Ausnehmung 26 im Bedarfsfall wieder gelöst werden.

Das Werkzeug gemäß Fig. 1 ist dazu hergerichtet, Bauteile mit unterschiedlicher radialer Erstreckung in einfacher Weise herzustellen. Hierzu ist die Auflagefläche 15 des Trägers 14 variabel, d.h. veränderbar, ausgestaltet.

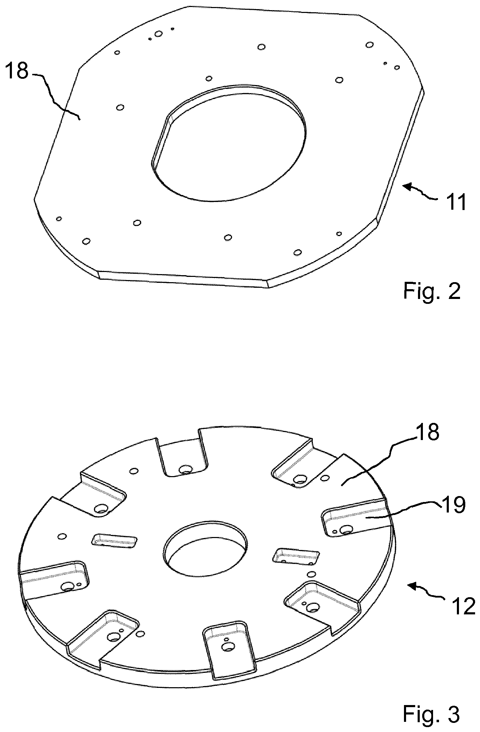

Bezugsziffer 1 in Fig. 2 zeigt die düsenseitige Spanneinrichtung 11 mit einer Montagefläche 18, an der der erste Formeinsatz 3 mittels darin vorgesehener Montagebohrungen fixiert werden kann.

Die Spanneinrichtung 12 der Auswerferseite ist in Fig. 3 dargestellt. Sie umfasst ebenfalls eine Montagefläche 18 zur Befestigung des zweiten Formeinsatzes 4 sowie einer Reihe entlang des Umfangs angeordneter Vertiefungen 19, deren Bedeutung nachstehend näher erläutert werden wird. In der Mitte der Spanneinrichtung ist ein Durchgangsloch vorgesehen, welches die Hülse 24 sowie den Mitteleinsatz 9 (vgl. Fig. 1) aufnimmt.

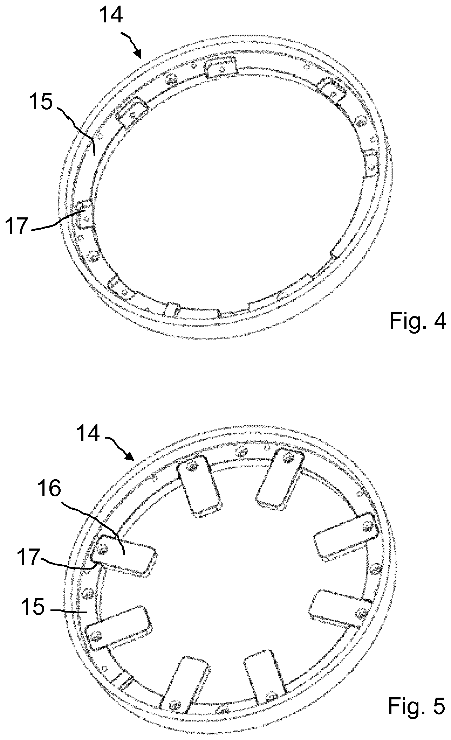

Der Träger 14 der zweiten Formhälfte 2 ist gemäß Fig. 4 als umlaufender Ring ausgebildet und kann gemäß der gezeigten Ausgestaltung einen L-förmigen Querschnitt aufweisen. Der Träger 14 besteht vorzugsweise aus Metall, insbesondere Stahl. Entlang des Trägers 14 sind umfänglich eine Mehrzahl von Ausnehmungen 17 vorgesehen, deren Bedeutung nachstehend näher erläutert werden wird. Der Träger 14 bildet eine umlaufende Auflagefläche 15 aus, die an der Unterseite der Abstreifeinrichtung 6 (vgl. Fig. 1) angreift, sodass die Abstreifeinrichtung 6 bei einem Nachobenfahren des Mitteleinsatzes 9 bzw. der Trägerplatte 28 das Formteil nach oben aus der Kavität 7 des zweiten Formeinsatzes 4 herausheben kann.

Die Darstellung gemäß Fig. 5 zeigt den Träger 14 aus Fig. 4 mit einer vergrößerten Auflagefläche 15. Die Vergrößerung der Auflagefläche 15 erfolgt durch das Einsetzen einer Mehrzahl von plattenförmigen Flächenelementen 16 in die jeweiligen Ausnehmungen 17 entlang des Umfangs des Trägers 14. Die Flächenelemente 16 werden über eine Schraubverbindung mit dem Träger fest verbunden. Vorzugsweise sind die Ausnehmungen 17 bzw. Flächenelemente 16 in ihren Dimensionen so aufeinander abgestimmt, dass die hierdurch erreichte Vergrößerung der Auflagefläche 15 als, zumindest im Wesentlichen, durchgängige Ebene ausgebildet ist, also kein Versatz zwischen den Flächenelementen 16 und der Auflagefläche 15 des Trägers 14 vorherrscht.

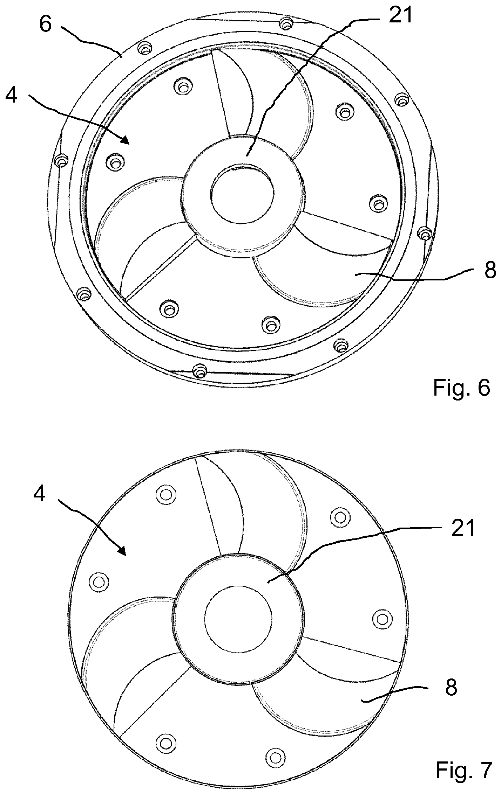

Fig. 6 zeigt eine perspektivische Darstellung des zweiten Formeinsatzes 4 zusammen mit der außen umlaufenden, ringförmigen Abstreifeinrichtung 6. Beide bestehen aus 3D-gedrucktem Material. Die Befestigung des Formeinsatzes 4 an der Spanneinrichtung 12 erfolgt über (nicht dargestellte) Schrauben, die in entsprechende Bohrungen eingreifen. Im Bereich des Formeinsatzes 4 befinden sich die Bohrungen außerhalb des Bereichs der Kavität 8, d.h. außerhalb des Formgebungsbereichs.

Bei der in Fig. 6 dargestellten Ausgestaltung des zweiten Formeinsatzes 4 sowie der Abstreifeinrichtung 6 wird ein Lüfterrad mit großem Durchmesser erzeugt, für dessen außenumfänglichen Entformung der ringförmige Träger gemäß Fig. 4 mit der darin dargestellten Auflagefläche 15 aufgrund der schmalen Abstreifeinrichtung 6 genügt.

Die Erfindung ermöglicht es, in einfacher Weise das Formwerkzeug dahingehend umzubauen, dass auch Formteile mit deutlich geringerem Radius ohne großem Aufwand und in rascher Umrüstzeit hergestellt werden können.

Hierzu werden gemäß Fig. 5 in die umlaufenden Ausnehmungen 17 des Trägers 14 Flächenelemente 16 eingesetzt und darin fixiert, die von dem ringförmigen Träger 14 radial nach innen in den Freiraum hineinragen und die Auflagefläche 15 hierdurch radial nach innen vergrößern. Vorzugsweise bilden die einzelnen Flächenelemente 16 sowie der umlaufende ringförmige Träger 14 mit seiner Auflage 15 eine bündige Auflageebene.

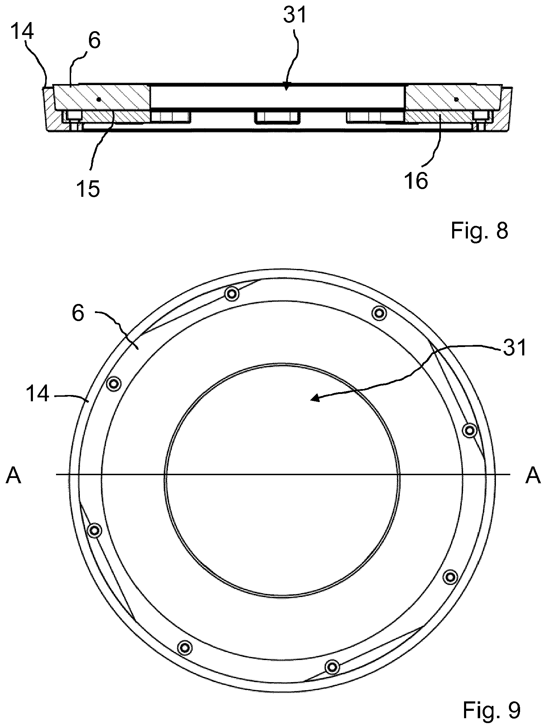

Hierdurch kann eine breitere Abstreifeinrichtung 6, wie sie als Beispiel in Fig. 9 gezeigt ist, in den ringförmigen Träger 14 eingelegt werden. Die Abstreifeinrichtung 6 in Fig. 9 ist ohne den zweiten Formteileinsatz 4 dargestellt, der in den Freiraum 31 eingesetzt wird.

Fig. 8 zeigt eine Schnittdarstellung entlang der Linie A-A aus Fig. 9. Wie aus Fig. 8 ersichtlich ist, bildet der ringförmige Träger 14 zusammen mit den Flächenelementen 16 eine bündige Auflagefläche 15, die eine ausreichende mechanische Stabilität für die Abstreifeinrichtung 6 während der Auswerfbewegung des Formteils gewährleistet. Der zweite Formeinsatz ist auch in Fig. 8 der Übersichtlichkeit halber nicht eingezeichnet. Zu sehen ist daher lediglich der für den Formeinsatz 4 vorgesehene Freiraum 31.

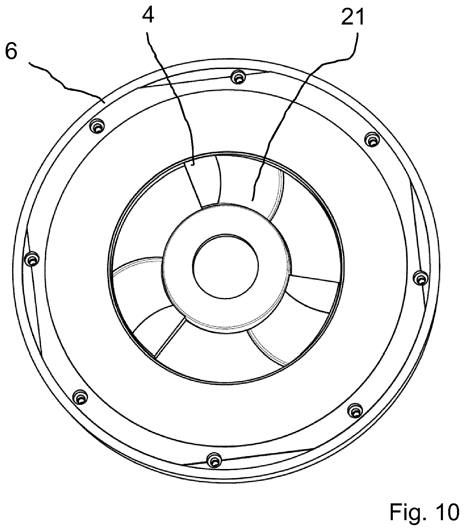

Fig. 10 zeigt demgegenüber die Abstreifeinrichtung 6 aus Fig. 8 bzw. 9 zusammen mit dem darin befindlichen Formeinsatz 4 mit kleinerem Durchmesser. Wie aus den Fig. 8 bis 10 ersichtlich ist, sind lediglich die Größenverhältnisse der Abstreifeinrichtung 6 bzw. des Formeinsatzes 4 im Vergleich zu den Fig. 6 und 7 verändert.

Wie z.B. aus Fig. 6 deutlich wird, können Schraubverbindungen zur Fixierung des Formeinsatzes 4 an der Spanneinrichtung 12 lediglich in Bereichen erfolgen, die außerhalb der Kavität 8 liegen. Infolgedessen können z.B. bei einem Lüfterrad, wie aus Fig. 6 ersichtlich, keine Schrauben im Mittelbereich 21 des Formeinsatzes vorgesehen sein.

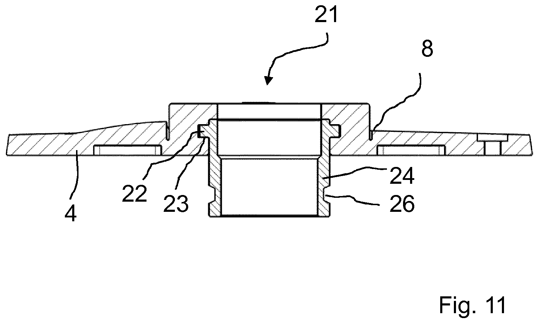

Die Teilschnittdarstellung des Formeinsatzes 4 gemäß Fig. 11 zeigt die Verriegelung des Formeinsatzes 4 durch die Hülse 24 mittels mindestens einem seitlich vorgesehenen Vorsprung 22, der in eine entsprechende Ausnehmung 23 am Formteil 4 eingreift. Die Verriegelung bzw. Entriegelung von Formeinsatz 4 und Hülse 24 kann hierbei z.B. nach Art eines Bajonettverschlusses erfolgen. Die Konstruktion ermöglicht es, den Formeinsatz 4 auch in seinem Mittelbereich, d.h. im Bereich des Mitteleinsatzes (vgl. Fig. 1), zu fixieren, um zu vermeiden, dass eine Torsions- oder Biegebelastung auf den Formeinsatz in dessen Mittelbereich 21 beim Heraushebeln des Formteils aus der Kavität 8 zu einer Beschädigung des Formeinsatzes 4 führt.

### BEZUGSZEICHENLISTE

- 1: erste Formhälfte
- 2: zweite Formhälfte
- 3: erster Formeinsatz
- 4: zweiter Formeinsatz
- 5: Formhohlraum
- 6: Abstreifeinrichtung
- 7: Kavität
- 8: Kavität
- 9: Mittelleinsatz (Auswerferseite)
- 10: Bauteil
- 11: Spanneinrichtung
- 12: Spanneinrichtung
- 13: Befestigungspunkt
- 14: Träger
- 15: Auflagefläche
- 16: Flächenelement
- 17: Ausnehmung
- 18: Montagefläche
- 19: Vertiefung
- 20: Halteeinrichtung
- 21: Mittelbereich
- 22: Vorsprung
- 23: Ausnehmung
- 24: Hülse
- 25: Trennebene
- 26: Ausnehmung
- 27: Betätigungselement
- 27a: Einsatz
- 27b: Gewindestange
- 27c: Schieber
- 28: Trägerplatte
- 29: Zuführkanal
- 30: Druckleiste
- 31: Freiraum für Formeinsatz
- 32: Kühlungselement
- 33: Mitteleinsatz (Druckseite)

## Patentansprüche

1. Formwerkzeug zum Formen eines Bauteils (10) umfassend
eine erste düsenseitige und eine zweite auswerferseitige Formhälfte (1, 2),
je einen Formeinsatz (3, 4), der in eine Formhälfte (1, 2) eingesetzt ist, wobei die Formeinsätze (3, 4) im geschlossenen Zustand des Formwerkzeugs einen Formhohlraum (5) des Formwerkzeugs begrenzen und die Formeinsätze (3, 4) durch einen generativen, schichtförmigen Aufbau aus einem verfestigbaren Material hergestellt sind, und
eine vorzugsweise thermoplastische Formmasse in den Formhohlraum (5) einspritzbar ist, **dadurch gekennzeichnet, dass**
im Bereich des äußeren Umfangs des auswerferseitigen Formeinsatzes (4) eine Abstreifeinrichtung (6) vorgesehen ist,
die Abstreifeinrichtung (6) durch einen generativen, schichtförmigen Aufbau aus einem verfestigbaren Material hergestellt ist,
ein axial verfahrbarer Träger (14) mit einer Auflagefläche (15) vorgesehen ist, die unterhalb der Abstreifeinrichtung (6) positioniert ist und
die Auflagefläche (15) des Trägers (14) veränderbar ist.

2. Formwerkzeug nach Anspruch 1, **dadurch gekennzeichnet, dass** die Abstreifeinrichtung (6) und/oder der Träger (14) ringförmig sind.

3. Formwerkzeug nach Anspruch 1 oder 2, **dadurch gekennzeichnet, dass** eine Kavität (7) die Abstreifeinrichtung (6) in radialer Richtung überragt.

4. Formwerkzeug nach Anspruch 1, **dadurch gekennzeichnet, dass** zur Veränderung der Auflagefläche (15) mindestens ein mit dem Träger (14) verbindbares Flächenelement (16) vorgesehen ist.

5. Formwerkzeug nach Anspruch 1 oder 4, **dadurch gekennzeichnet, dass** eine Mehrzahl von Flächenelementen (16) entlang des Umfangs des Trägers (14) positionierbar sind.

6. Formwerkzeug nach Anspruch 1, 4 oder 5, **dadurch gekennzeichnet, dass** die Oberfläche des Flächenelements (16) mit der Oberfläche der Auflagefläche (15) am Träger (14), zumindest im Wesentlichen, bündig verläuft.

7. Formwerkzeug nach Anspruch 1, 4 bis 6, **dadurch gekennzeichnet, dass** das Flächenelement (16) in einer Ausnehmung (17) am Träger positioniert ist.

8. Formwerkzeug nach Anspruch 1, 4 bis 7, **dadurch gekennzeichnet, dass** das Flächenelement (16) plattenförmig ausgebildet ist.

9. Formwerkzeug nach Anspruch 1, 4 bis 8, **dadurch gekennzeichnet, dass** zur Verbindung des Flächenelements (16) mit dem Träger (14) eine Schraubverbindung vorgesehen ist.

10. Formwerkzeug nach mindestens einem der vorhergehenden Ansprüche, **dadurch gekennzeichnet, dass** die Formhälfte (1, 2) eine Spanneinrichtung (11, 12) mit einer Montagefläche (18) für den Formeinsatz (3, 4) aufweist.

11. Formwerkzeug nach Anspruch 10, **dadurch gekennzeichnet, dass** die Montagefläche der Spanneinrichtung (12) Vertiefungen (19) aufweist, die im geschlossenen Zustand des Formwerkzeugs das Flächenelement (16) und/oder den Träger (14) aufnimmt bzw. aufnehmen.

12. Formwerkzeug nach mindestens einem der vorhergehenden Ansprüche, **dadurch gekennzeichnet, dass** ein axial verfahrbarer Mitteleinsatz (9) vorgesehen ist.

13. Formwerkzeug nach Anspruch 12, **dadurch gekennzeichnet, dass** im Bereich des Mitteleinsatzes (9) des Formeinsatzes (4) Haltemittel (20) zur Positionsfixierung des Formeinsatzes (4) vorgesehen ist, die zur gegenüberliegenden Formhälfte (1) verdeckt angeordnet sind.

14. Formwerkzeug nach Anspruch 13, **dadurch gekennzeichnet, dass** die Haltemittel (20) mindestens einen Vorsprung (22) aufweisen, der in eine Ausnehmung (23) am zweiten Formeinsatz (4) oder umgekehrt eingreift.

15. Formwerkzeug nach Anspruch 13 oder 14, **dadurch gekennzeichnet, dass** die Haltemittel (20) eine Hülse (24) umfassen, die den Mitteleinsatz (9) umgreift.

16. Formwerkzeug nach Anspruch 15, **dadurch gekennzeichnet, dass** der Formeinsatz (14) und die Hülse (24) nach Art eines Bajonettverschlusses miteinander verbindbar sind.

17. Formwerkzeug nach mindestens einem der Ansprüche 13 bis 16 **dadurch gekennzeichnet, dass** die Positionsfixierung über mindestens ein Befestigungselement (27) lösbar ist.

18. Formwerkzeug nach Anspruch 17, **dadurch gekennzeichnet, dass** das Befestigungselement (27) mindestens einen positionsveränderbaren Schieber (27c) umfasst, der in eine Ausnehmung (26) an der Hülse (24) eingreift.

19. Verfahren zur Herstellung eines Bauteils im Spritzgießverfahren unter Verwendung eines Formwerkzeugs nach mindestens einem der vorhergehenden Ansprüche.

## Claims

1. Mould for moulding a component (10), comprising
a first nozzle-side and a second ejector-side mould half (1, 2),
a mould insert (3, 4) which is inserted into a respective mould half (1, 2), wherein, in the closed state of the mould, the mould inserts (3, 4) delimit a mould cavity (5) of the mould, and the mould inserts (3, 4) are produced from a solidifiable material by additive buildup in layers, and
a preferably thermoplastic moulding compound can be injected into the mould cavity (5), **characterized in that**
a stripping device (6) is provided in the region of the outer circumference of the ejector-side mould insert (4),
the stripping device (6) is produced from a solidifiable material by additive buildup in layers,
an axially movable support (14) having a bearing surface (15) which is positioned below the stripping device (6) is provided, and
the bearing surface (15) of the support (14) can be varied.

2. Mould according to Claim 1, **characterized in that** the stripping device (6) and/or the support (14) are/is annular.

3. Mould according to Claim 1 or 2, **characterized in that** a cavity (7) projects beyond the stripping device (6) in the radial direction.

4. Mould according to Claim 1, **characterized in that,** in order to vary the bearing surface (15), at least one planar element (16) which can be connected to the support (14) is provided.

5. Mould according to Claim 1 or 4, **characterized in that** a plurality of planar elements (16) can be positioned along the circumference of the support (14).

6. Mould according to Claim 1, 4 or 5, **characterized in that** the surface of the planar element (16) extends so as to be, at least substantially, flush with the surface of the bearing surface (15) on the support (14) .

7. Mould according to Claim 1, and 4 to 6, **characterized in that** the planar element (16) is positioned in a recess (17) on the support.

8. Mould according to Claim 1, and 4 to 7, **characterized in that** the planar element (16) takes the form of a plate.

9. Mould according to Claim 1, and 4 to 8, **characterized in that** a screw connection is provided to connect the planar element (16) to the support (14).

10. Mould according to at least one of the preceding claims, **characterized in that** the mould half (1, 2) has a clamping device (11, 12) with a mounting surface (18) for the mould insert (3, 4).

11. Mould according to Claim 10, **characterized in that** the mounting surface of the clamping device (12) has depressions (19) which, in the closed state of the mould, receive the planar element (16) and/or the support (14).

12. Mould according to at least one of the preceding claims, **characterized in that** an axially movable central insert (9) is provided.

13. Mould according to Claim 12, **characterized in that** holding means (20) for positionally fixing the mould insert (4) are provided in the region of the central insert (9) of the mould insert (4) and are arranged so as to be concealed with respect to the opposite mould half (1).

14. Mould according to Claim 13, **characterized in that** the holding means (20) have at least one projection (22) which engages in a recess (23) on the second mould insert (4), or vice versa.

15. Mould according to Claim 13 or 14, **characterized in that** the holding means (20) comprise a sleeve (24) which encompasses the central insert (9).

16. Mould according to Claim 15, **characterized in that** the mould insert (14) and the sleeve (24) can be connected to one another in the manner of a bayonet fastening.

17. Mould according to at least one of Claims 13 to 16, **characterized in that** the positional fixing can be released via at least one fastening element (27).

18. Mould according to Claim 17, **characterized in that** the fastening element (27) comprises at least one positionally variable slide (27c) which engages in a recess (26) on the sleeve (24).

19. Method for producing a component in an injection-moulding method using a mould according to at least one of the preceding claims.

## Revendications

1. Outil de moulage destiné à mouler un composant (10), ledit outil de moulage comprenant
des première moitié de moule côté buse et deuxième moitié de moule côté éjecteur (1, 2),
un insert de moule (3, 4) inséré dans chacune des moitiés de moule (1, 2), les inserts de moule (3, 4) délimitant une cavité de moule (5) de l'outil de moulage lorsque l'outil de moulage est fermé et les inserts de moule (3, 4) étant fabriqués à partir d'un matériau solidifiable par une structure stratiforme générative, et
une matière de moulage de préférence thermoplastique pouvant être injectée dans la cavité de moule (5), **caractérisé en ce que**
un dispositif de démoulage (6) est prévu dans la région de la périphérie extérieure de l'insert de moule côté éjecteur (4),
le dispositif de démoulage (6) est réalisé à partir d'un matériau solidifiable par une structure stratiforme générative,
un support (14) mobile axialement est pourvu d'une surface d'appui (15) qui est positionnée sous le dispositif de démoulage (6) et
la surface d'appui (15) du support (14) peut être modifiée.

2. Outil de moulage selon la revendication 1, **caractérisé en ce que**
le dispositif de démoulage (6) et/ou le support (14) sont de forme annulaire.

3. Outil de moulage selon la revendication 1 ou 2, **caractérisé en ce que**
une cavité (7) fait saillie du dispositif de démoulage (6) dans la direction radiale.

4. Outil de moulage selon la revendication 1, **caractérisé en ce que**
au moins un élément de surface (16) qui peut être relié au support (14) est prévu pour modifier la surface d'appui (15).

5. Outil de moulage selon la revendication 1 ou 4, **caractérisé en ce que**
une pluralité d'éléments de surface (16) peuvent être positionnés le long de la périphérie du support (14) .

6. Outil de moulage selon la revendication 1, 4 ou 5, **caractérisé en ce que**
la surface de l'élément de surface (16) affleure, au moins sensiblement, de la surface d'appui (15) du support (14).

7. Outil de moulage selon la revendication 1, 4 à 6, **caractérisé en que**
l'élément de surface (16) est positionné dans un évidement (17) du support.

8. Outil de moulage selon la revendication 1, 4 à 7, **caractérisé en ce que**
l'élément de surface (16) est en forme de plaque.

9. Outil de moulage selon la revendication 1, 4 à 8, **caractérisé en ce que**
une liaison par vis est prévue pour relier l'élément de surface (16) au support (14).

10. Outil de moulage selon l'une au moins des revendications précédentes, **caractérisé en ce que**
la moitié de moule (1, 2) présente un dispositif de serrage (11, 12) pourvue d'une surface de montage (18) destinée à l'insert de moule (3, 4).

11. Outil de moulage selon la revendication 10, **caractérisé en ce que**
la surface de montage du dispositif de serrage (12) comporte des creux (19) qui reçoivent l'élément de surface (16) et/ou le support (14) lorsque l'outil de moulage est fermé.

12. Outil de moulage selon l'une au moins des revendications précédentes, **caractérisé en ce que**
un insert central (9) mobile axialement est prévu.

13. Outil de moulage selon la revendication 12, **caractérisé en ce que**
des moyens de retenue (20), qui sont destinés à fixer la position de l'insert de moule (4) et qui sont disposés en étant cachés par rapport à la moitié de moule opposée (1), sont prévus dans la région de l'insert central (9) de l'insert de moule (4).

14. Outil de moulage selon la revendication 13, **caractérisé en ce que**
les moyens de retenue (20) comportent au moins une saillie (22) qui s'engage dans un évidement (23) du deuxième insert de moule (4) ou inversement.

15. Outil de moulage selon la revendication 13 ou 14, **caractérisé en ce que**
les moyens de retenue (20) comprennent un manchon (24) qui s'engage autour de l'insert central (9).

16. Outil de moulage selon la revendication 15, **caractérisé en ce que**
l'insert de moule (14) et le manchon (24) peuvent être reliés l'un à l'autre à la manière d'un joint à baïonnette.

17. Outil de moulage selon au moins l'une des revendications 13 à 16, **caractérisé en ce que**
la fixation de position peut être libérée par le biais d'au moins un élément de fixation (27).

18. Outil de moulage selon la revendication 17, **caractérisé en ce que**
l'élément de fixation (27) comprend au moins un coulisseau (27c) à position variable qui s'engage dans un évidement (26) du manchon (24).

19. Procédé de fabrication d'un composant par un procédé de moulage par injection à l'aide d'un outil de moulage selon l'une au moins des revendications précédentes.
